(19) Europäisches Patentamt
European Patent Office
Office européen des brevets

(11) Numéro de publication : **0 145 598**
**B1**

(12) **FASCICULE DE BREVET EUROPÉEN**

(45) Date de publication du fascicule du brevet : **10.02.88**

(51) Int. Cl.⁴ : **G 09 B 9/04**

(21) Numéro de dépôt : **84402529.6**

(22) Date de dépôt : **07.12.84**

(54) **Procédé et dispositif d'entraînement à la conduite d'engins mobiles.**

(30) Priorité : **15.12.83 FR 8320136**

(43) Date de publication de la demande :
**19.06.85 Bulletin 85/25**

(45) Mention de la délivrance du brevet :
**10.02.88 Bulletin 88/06**

(84) Etats contractants désignés :
**AT BE CH DE GB IT LI LU NL SE**

(56) Documents cités :
**DE-A- 2 237 519**
**FR-A- 2 110 506**
**FR-A- 2 491 660**
**GB-A- 2 120 495**
**US-A- 3 686 435**

(73) Titulaire : **GIRAVIONS DORAND, Société dite:**
**5 rue Jean Macé**
**F-92150 Suresnes (FR)**

(72) Inventeur : **Allard, Jean-Claude**
**13 rue Ravon**
**F-92340 Bourg la Reine (FR)**
Inventeur : **Deslypper, Christian**
**6 Square Saint Vincent Jouy le Moutier**
**F-95000 Cergy (FR)**
Inventeur : **Saunier, Christian**
**1 Avenue Derondel**
**F-95120 Ermont (FR)**

(74) Mandataire : **Thibon-Littaye, Annick et al**
**Cabinet A. THIBON-LITTAYE 11 rue de l'Etang**
**F-78160 Marly-le-Roi (FR)**

**EP 0 145 598 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention concerne les procédés et dispositifs de simulation du type servant à l'entraînement à la conduite d'engins mobiles, notamment de véhicules automobiles. Il s'agit pour ce qui est connu, de faire asseoir le conducteur soumis à l'entraînement à un poste de pilotage, analogue à celui d'une voiture automobile par exemple, et de faire apparaître devant lui une route ou paysage en défilement, dont on commande la visualisation en fonction des ordres de conduite que donne le conducteur en agissant sur un volant faisant partie du poste de pilotage. En pratique, on projette un film reproduisant une route vue au travers du pare-brise d'un véhicule.

Mais en fait, les dispositifs connus ne peuvent guère convenir que pour des activités ludiques. Les images que l'on sait projeter devant le conducteur dans une simulation par ces dispositifs donnent des effets tellement éloignés de la réalité qu'il ne peut être question d'un véritable entraînement qui permette l'acquisition des réflexes nécessaires au volant d'une voiture automobile, et encore moins celle des automatismes indispensables pour le pilotage d'engins plus rapides.

Un tel dispositif d'entraînement était connu par exemple du brevet DE-A-2 237 519 dans lequel le conducteur est assis face à un écran de visualisation sur lequel apparaît les images d'un paysage préalablement enregistré à partir d'une conduite idéale. Les commandes du conducteur sur un volant et une pédale d'accélération sont transformées en variation de tension qui agissent sur l'orientation d'un miroir réfléchissant la projection des images projetées sur l'écran. La projection du film étant plus large que l'écran, le déplacement du miroir permet au conducteur de voir se déplacer le paysage latéralement. Ce dispositif a l'inconvénient d'utiliser un dispositif complexe électro-mécanique pour commander le déplacement d'une image et de proposer au conducteur des simulations éloignées de la réalité avec une précision grossière.

Un autre dispositif d'entraînement connu par le document GB-A-2 120 495 utilise une pluralité de vidéodisques comportant chacun l'enregistrement d'une partie de paysage. Un microprocesseur gère la commande de ces vidéo-disques de manière à ce que, selon le choix du conducteur les images d'un trajet apparaissent. On obtient alors la simulation d'un trajet quelconque choisi par le conducteur à chaque possibilité d'embranchement. Ce dispositif a l'inconvénient de se limiter à un choix de séquences sans aucune possibilité de comparer la qualité de conduite du conducteur par rapport à un conducteur modèle.

La présente invention vise à permettre un entraînement, d'une qualité bien supérieure à celle que peut procurer un poste de pilotage des jeux actuels, et ceci grâce à une simulation de l'incidence qu'auraient dans une conduite réelle, les erreurs de direction commises dans les commandes données du poste de pilotage.

Ainsi, l'invention a pour objet un procédé d'entraînement à la conduite d'engins mobiles, dans un poste de pilotage comprenant un organe de pilotage en direction à manœuvrer par un conducteur élève et des moyens de visualisation d'un paysage en défilement devant lui, selon lequel :

— on détermine une fenêtre de visualisation devant le conducteur,

— on détermine un enregistrement préalablement réalisé d'un paysage en défilement devant un conducteur modèle pour produire des images dudit paysage en défilement devant le poste de pilotage,

— on détermine les erreurs de pilotage en direction du conducteur élève par comparaison entre des commandes dudit organe de pilotage par le conducteur élève et des commandes modèles de direction du conducteur modèle préalablement enregistrées,

— et l'on commande un déplacement des images par rapport à la fenêtre de visualisation en fonction desdites erreurs,

ledit procédé étant caractérisé en ce que :

— on comprime optiquement le paysage en défilement dans au moins une direction correspondant à celle des erreurs de pilotage possibles, à partir du paysage tel que vu par le conducteur modèle sous un angle plus large que celui de ladite fenêtre de visualisation,

— on enregistre sur un vidéodisque le paysage en défilement compressé optiquement et, simultanément, les commandes de direction du conducteur modèle,

— on produit lesdites images par lecture sur vidéodisque dudit enregistrement comprimé en assurant une expansion compensatrice de la compression à l'enregistrement et une sélection d'une fraction de l'enregistrement expansé à visualiser dans ladite fenêtre.

L'invention s'applique en particulier à l'entraînement à la conduite de véhicules du type des voitures automobiles. Mais bien entendu elle n'y est pas limitée, et quand on a utilisé certaines expressions qui se rapportent plus particulièrement à des voitures, on doit comprendre qu'elles englobent dans leur signification tout autre organe équivalent dans d'autres applications. En particulier, le volant d'une voiture peut être aussi bien un manche de pilotage ou tout autre organe de commande de direction d'un véhicule, tandis que le terme « route » peut représenter toute sorte de paysage environnant le trajet à suivre par le conducteur.

Par ailleurs, selon une autre caractéristique de l'invention, les erreurs de direction sont déterminées sur la variation d'orientation de l'organe de pilotage des commandes modèles pendant un temps unitaire, par comparaison entre le pilotage du conducteur élève et un enregistrement effectué à une vitesse de conduite constante imposée

à l'engin.

L'invention a aussi pour objet un dispositif d'entraînement à la conduite d'engins mobiles dans un poste de pilotage comportant :

— un organe de pilotage en direction à manœuvrer par un conducteur élève,

— des moyens de visualisation d'un enregistrement préalablement réalisé d'un paysage en défilement devant un conducteur modèle produisant des images dudit paysage en défilement devant le poste de pilotage,

— une fenêtre de visualisation d'une partie des images de l'enregistrement préalable devant le conducteur élève,

— des moyens pour déterminer les erreurs de pilotage en direction du conducteur élève par comparaison entre des commandes dudit organe par le conducteur élève et des commandes modèles de direction du conducteur modèle préalablement enregistrées,

— des moyens pour commander un déplacement des images par rapport à la fenêtre de visualisation en fonction desdites erreurs,

caractérisé en ce qu'il comporte en outre :

— un lecteur de vidéodisque assurant la production desdites images, sur lequel on a enregistré les commandes de direction du conducteur modèle et le paysage en défilement compressé optiquement dans au moins une direction correspondant à celle des erreurs de pilotage possibles, ledit paysage étant vu par le conducteur modèle sous un angle plus large que celui de la fenêtre de visualisation,

— et des moyens assurant une expansion compensatrice de la compression à l'enregistrement et une sélection d'une fraction de l'enregistrement expansé à visualiser dans ladite fenêtre.

On décrira maintenant plus en détails une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés, dans lesquels :

— la figure 1 illustre schématiquement la composition d'un dispositif de simulation selon l'invention servant à l'entraînement à la conduite automobile ;

— la figure 2 est un schéma synoptique du fonctionnement ;

— la figure 3 illustre le traitement des signaux vidéo conduisant aux images visualisées ;

— la figure 4 représente schématiquement un circuit pour la commande de la visualisation modifié pour assurer ce traitement.

— la figure 5 illustre des calculs effectués par le calculateur du dispositif.

Conformément à la figure 1, un dispositif selon l'invention, dans le cas particulier du mode de réalisation décrit, comporte un poste de pilotage de voiture 1, dont on a représenté le volant 2 et le levier de changement de vitesse 3 notamment. Le siège sur lequel s'assied le conducteur élève pour manœuvrer le volant 2 dans une procédure d'entraînement, n'a pas été représenté. On voit par contre un dispositif de visualisation 4, matérialisé sous la forme d'un moniteur de télévision.

La commande du dispositif est placée sous le contrôle d'un calculateur 10 à microprocesseurs. Conformément aux connections représentées sur la figure, ce calculateur reçoit des informations traduisant les différents ordres de commandes donnés par le conducteur élève, au niveau du poste de pilotage 1, pendant une séance d'entraînement. Ces informations proviennent de capteurs 5, 6, 7, 9, parmi lesquels, en particulier, le capteur 5 est sensible aux mouvements imposés à la pédale d'accélération du poste de pilotage et le capteur 9 détecte l'orientation angulaire du volant 2 par rapport à une orientation de référence, en général celle qui correspond à un véhicule allant tout droit. Le calculateur 10 pourra donc prendre en compte dans ses calculs, non seulement la direction suivie par un véhicule dont la conduite est ainsi simulée, mais en outre la vitesse et l'accélération.

Le poste de pilotage 1 reçoit par ailleurs des informations du calculateur 10, lequel commande notamment des indicateurs 11, 12, dont en particulier un indicateur de vitesse 12, pour simuler le fonctionnement qui serait le leur dans un véhicule réel. Il peut commander de même différents appareils annexes que l'on a illustrés, dans le cas particulier considéré, par un haut-parleur 13 permettant de simuler le bruit du moteur. Le même calculateur 10 commande le moniteur 4 et la définition des images visualisées sur son écran 21, ce pour quoi on a représenté sur la figure 1 une ligne 17 de transmission du signal vidéo et un appareil 16 permettant d'imposer un décalage spatial au balayage par ligne qui assure la reconstitution des images suivant les données du signal vidéo.

D'autres informations traitées par le calculateur 10 sont des ordres donnés par un instructeur par l'intermédiaire d'un pupitre 15. Il s'agit notamment d'ordres définissant le choix d'une séquence d'entraînement parmi plusieurs possibles, d'ordres initialisant un exercice, ou d'ordres commandant l'arrêt du déroulement d'un exercice, par exemple à un stade que l'instructeur veut commenter.

Le dernier élément essentiel de la figure 1 est un lecteur de vidéodisque 14 qui assure la lecture d'un support d'enregistrements, ici un vidéodisque. Démarrage, arrêt et vitesse de lecture sont commandés depuis le calculateur 10. Le lecteur 14 est relié au calculateur 10 par deux lignes de transmission d'informations, l'une 19 pour la transmission d'un signal vidéo définissant les images à visualiser, l'autre 20 pour la transmission d'informations diverses enregistrées sur les canaux d'enregistrements sonores du vidéodisque. Enfin une ligne 18 assure une synchronisation entre le lecteur 14 et l'appareil de commande 16 du moniteur. Un magnétoscope 22 peut enregistrer les séquences de conduite de l'élève, et éventuellement les références du modèle, pour permettre de revisualiser les séquences d'entraînement pour commentaires.

Le procédé sera maintenant décrit en se référant à la figure 2 dans les opérations qui sont assurées par le calculateur 10. Sur le synoptique représenté, on a fait apparaître la fenêtre de visualisation 21 que constitue l'écran du moniteur 4, le volant 2 que manœuvre le conducteur élève, et le vidéodisque 24 dont les enregistrements sont lus par le lecteur 14. Le vidéodisque 24 porte un enregistrement d'images à partir duquel seront produites les images à visualiser devant le conducteur élève, et des informations diverses enregistrées sur les deux canaux réservés généralement au son dans les vidéodisques classiques. L'un de ces canaux peut être utilisé pour permettre la reproduction d'effets sonores. L'autre est réservé à un enregistrement des informations relatives à la conduite théorique par le conducteur modèle, ou « conduite modèle ».

Le mode de mise en œuvre décrit suppose que l'on a enregistré simultanément sur le vidéodisque, d'une part les informations d'images et, d'autre part, les informations de conduite théorique sous la forme des valeurs successives de l'angle d'orientation du véhicule par rapport à un axe de référence fixe. En variante, on peut utiliser un enregistrement sur cassette électronique ; une telle cassette « mémoire », associée au vidéodisque, joue alors le rôle du canal ci-dessus et les informations qu'elle contient, enregistrées d'après la conduite modèle, sont lues en combinaison avec les images issues du vidéodisque.

D'autre part, l'enregistrement de la route en défilement devant le conducteur modèle est supposé avoir été effectué alors que ce conducteur roulait à une vitesse constante relativement faible. On entend par là que cette vitesse constante est choisie pour rester généralement inférieure à la vitesse moyenne qu'adoptera le conducteur élève.

Lors de l'entraînement, le conducteur élève suit en principe la même route que le conducteur modèle, aux erreurs de conduite près, mais il n'a aucune raison de suivre cette route à la même vitesse. Le programme de fonctionnement du calculateur est conçu pour commander la visualisation des images de la route en défilement devant le conducteur élève en tenant compte aussi bien des erreurs de conduite entraînant une différence dans l'orientation du véhicule par rapport à celle enregistrée sur le vidéodisque pour l'image du même endroit de la route, que de l'incidence de la vitesse du véhicule sur l'image vue par le conducteur. Autrement dit, on simule une réaction aux déplacements du volant en fonction de la vitesse de parcours de la route.

A cet effet, on détecte en 26 l'angle de rotation $\theta$ du volant par rapport à une direction fixe, on calcule en 27 le rayon de courbure de la trajectoire du véhicule, soit R, et l'on calcule en 28 une grandeur qui sera ensuite comparée dans le comparateur 25 avec la grandeur correspondante déterminée en 32 à partir des informations du vidéodisque. L'incidence de la vitesse de défilement des images de la route est déjà présente dans la détermination des ordres de lecture donnés au lecteur de vidéodisque. Par variation de la vitesse de celui-ci, les images successives de l'enregistrement seront reproduites à la visualisation à un rythme plus ou moins rapide suivant que la vitesse sera plus ou moins élevée, la référence étant toujours par rapport à la vitesse constante adoptée par le conducteur modèle pour la prise de vue.

Les grandeurs comparées en 25 sont alors :

— d'une part $\Delta\beta/\Delta t$ où $\Delta\beta$ est la variation d'orientation pendant un temps unitaire arbitraire $\Delta t$, les variations de l'angle $\beta$ étant enregistrées pendant la conduite modèle,

— d'autre part $\Delta\alpha/\Delta t$ où $\Delta\alpha$ est la variation d'orientation pendant la conduite de l'élève pour le même temps unitaire.

Ce dernier rapport est calculé en 28, comme on en trouvera la justification de l'examen de la figure 5, par l'équation :

$$\Delta\alpha/\Delta t = V/R,$$

où V est la vitesse issue de l'action sur la pédale d'accélération et détectée en 33,

et R est le rayon de courbure calculé en 27.

Le comparateur 25 délivre un signal $\varepsilon$ qui traduit la différence entre les deux grandeurs comparées. Ce signal sert à commander un décalage latéral proportionnel du centre de l'image visualisée. Pour permettre ce décalage, on dispose à la visualisation, d'une image 23 qui est plus large que celle qui peut normalement être vue par le pare-brise du véhicule et dont on ne visualise qu'une fraction 22, sélectionnée en fonction du décalage souhaité, sur la fenêtre de visualisation constituée par l'écran 21. La production de l'image 23 est assurée en 31 à partir du signal vidéo lu sur le vidéodisque, ainsi que la sélection de la fraction 22 à visualiser en fonction des instructions de décalage.

On a enfin prévu que le calculateur élabore en 29 des informations de commandes de sanctions suivant les valeurs prises par l'écart déterminé par la comparaison en 25. On peut ainsi commander par exemple, soit l'allumage de voyants spéciaux, soit l'apparition d'indications correspondantes par incrustation dans l'image visualisée.

Pour pouvoir disposer de l'image large 23, l'enregistrement sur le vidéodisque est obtenu en filmant la route réelle au travers d'un objectif anamorphique, qui fournit une image couvrant un champ horizontal important, de format cinémascope. Cette image se trouve comprimée en largeur lorsqu'elle est enregistrée en respectant les normes usuelles du vidéodisque. A la restitution, l'image est expansée horizontalement dans un rapport inverse de celui de l'objectif anamorphique. L'image retrouve alors une géométrie correcte, mais sa largeur est supérieure à celle de l'écran du moniteur.

Les courbes de la figure 3 illustrent comment sont obtenus l'expansion de l'image comprimée et le décalage de la fraction d'image visualisée, par un appareil de commande schématisé sur la figure 4. Aux circuits usuels 35 qui commandent

par un enroulement 36 la déviation du faisceau dans le balayage en ligne (balayage horizontal), on ajoute un circuit complémentaire 37 qui amplifie le courant de balayage et lui ajoute un courant de valeur proportionnelle au décalage d'image à obtenir. La courbe de variation du courant de balayage I en fonction du temps t passe alors du tracé correspondant à l'image comprimée représenté par la première courbe de la figure 3 à celui de la seconde courbe, par amplification pour l'image expansée, puis de celui-ci à celui de la troisième courbe, par addition d'un courant constant Id, pour le décalage. Seules les parties du tracé apparaissant en traits plus épais donnent lieu à un balayage en ligne qui se trouve dans le cadre de l'écran du moniteur de télévision, ce qui représente donc la sélection de la fraction de l'image expansée à visualiser.

## Revendications

1. Procédé d'entraînement à la conduite d'engins mobiles, dans un poste de pilotage (1) comprenant un organe de pilotage (2) en direction à manœuvrer par un conducteur élève et des moyens de visualisation (4) d'un paysage en défilement devant lui, selon lequel :

— on détermine une fenêtre de visualisation (21) devant le conducteur,

— on utilise un enregistrement préalablement réalisé d'un paysage en défilement devant un conducteur modèle pour produire des images (23) dudit paysage en défilement devant le poste de pilotage (1),

— on détermine les erreurs de pilotage en direction du conducteur élève par comparaison entre des commandes dudit organe de pilotage (2) par le conducteur élève et des commandes modèles de direction du conducteur modèle préalablement enregistrées,

— et l'on commande un déplacement des images par rapport à la fenêtre de visualisation (21) en fonction desdites erreurs,

ledit procédé étant caractérisé en ce que :

— on comprime optiquement le paysage en défilement dans au moins une direction correspondant à celle des erreurs de pilotage possibles, à partir du paysage tel que vu par le conducteur modèle sous un angle plus large que celui de ladite fenêtre de visualisation (21),

— on enregistre sur un vidéodisque (14) le paysage en défilement compressé optiquement et, simultanément, les commandes de direction du conducteur modèle,

— on produit lesdites images (23) par lecture sur vidéodisque dudit enregistrement comprimé en assurant une expansion compensatrice de la compression à l'enregistrement et une sélection d'une fraction (22) de l'enregistrement expansé à visualiser dans ladite fenêtre (21).

2. Procédé selon la revendication 1, caractérisé en ce que ledit enregistrement des commandes de direction du conducteur modèle est situé sur un canal du vidéodisque normalement réservé au son.

3. Procédé selon l'une des revendications 1 ou 2, caractérisé en ce qu'on réalise ledit enregistrement du paysage sous forme d'un signal vidéo d'image comprimée produit à partir de prises de vues réalisées avec un objectif anamorphique.

4. Procédé selon l'une quelconque des revendications 1 à 3, caractérisé en ce que l'on assure ladite expansion par amplification du courant de balayage selon la direction de compression dérivé dudit signal vidéo d'image comprimée et l'on assure ladite sélection par un décalage de la valeur moyenne du courant.

5. Procédé selon l'une quelconque des revendications 1 à 4, caractérisé en ce que les erreurs de pilotage sont déterminées sur la variation d'orientation de l'organe de pilotage pendant un temps unitaire, par comparaison entre le pilotage du conducteur élève et un enregistrement des commandes modèles effectué à une vitesse de déplacement constante imposée à l'engin.

6. Dispositif d'entraînement à la conduite d'engins mobiles dans un poste de pilotage (1) comportant :

— un organe de pilotage (2) en direction à manœuvrer par un conducteur élève,

— des moyens de visualisation (4) d'un enregistrement préalablement réalisé d'un paysage en défilement devant un conducteur modèle produisant des images (23) dudit paysage en défilement devant le poste de pilotage,

— une fenêtre de visualisation d'une partie des images (23) de l'enregistrement préalable devant le conducteur élève,

— des moyens (25) pour déterminer les erreurs de pilotage en direction du conducteur élève par comparaison entre des commands dudit organe (2) par le conducteur élève et des commandes modèles de direction du conducteur modèle préalablement enregistrées,

— des moyens pour commander un déplacement des images par rapport à la fenêtre de visualisation en fonction desdites erreurs,

caractérisé en ce qu'il comporte en outre :

— un lecteur de vidéodisque (14) assurant la production desdites images sur lequel on a enregistré les commandes de direction du conducteur modèle et le paysage en défilement compressé optiquement dans au moins une direction correspondant à celle des erreurs de pilotage possibles, ledit paysage étant vu par le conducteur modèle sous un angle plus large que celui de la fenêtre de visualisation,

— et des moyens (35, 36, 37) assurant une expansion compensatrice de la compression à l'enregistrement et une sélection d'une fraction de l'enregistrement expansé à visualiser dans ladite fenêtre.

7. Dispositif selon la revendication 6, caractérisé en ce qu'il comporte des moyens propres à la mise en œuvre du procédé selon l'une quelconque des revendications 1 à 5.

## Claims

1. Method of training for driving moving vehicles in a control station (1) comprising a steering device (2) to be operated by a trainee driver and means (4) for displaying a scene which is moving in front of him, in which :

— a display window (21) is determined in front of the driver,

— a previously effected recording of a scene moving in front of a model driver is used for producing images (23) of said moving scene in front of the control station (1),

— steering errors of the trainee driver are determined by comparison between control movements applied to said steering device (2) by the trainee driver and previously recorded steering control movements by the model driver,

— and there is initiated a displacement of the images with respect to the display window (21) as a function of said errors,

said method being characterized in that :

— the moving scene is compressed optically in at least one direction corresponding to that of the possible steering errors, starting from the scene as observed by the model driver at a wider angle than that of said display window (21),

— there are simultaneously recorded on a video disk (14) the optically compressed moving scene and the steering control movements of the model driver,

— said images (23) are produced by reading said compressed recording on a video disk by producing an expansion which compensates for the compression at the time of recording and a selection of a fraction (22) of the expanded recording to be displayed in said window (21).

2. Method in accordance with claim 1, characterized in that said recording of the steering control movements carried out by the model driver is located on a channel of the video disk which is normally reserved for sound.

3. Method in accordance with claim 1 or claim 2, characterized in that said recording of the scene is carried out in the form of a compressed-image video signal produced from shots taken with an anamorphic lens.

4. Method in accordance with any one of claims 1 to 3, characterized in that said expansion is carried out by amplification of the sweep current in the direction of compression derived from said compressed-image video signal and said selection is carried out by means of a shift in the average value of the current.

5. Method in accordance with any one of claims 1 to 4, characterized in that the steering errors are determined on the variation in orientation of the steering device during a unitary time interval by comparison between the steering operation of the trainee driver and a recording of the model steering movements, this recording being made at a constant speed of travel imposed on the vehicle.

6. Device for training in the driving of moving vehicles in a control station (1) comprising :

— a steering device (2) to be operated by a trainee driver,

— means (4) for displaying a previously effected recording of a scene moving in front of a model driver for producing images (23) of said moving scene in front of the control station,

— a window for displaying part of the images (23) of the previous recording in front of the trainee driver,

— means (25) for determining the steering errors of the trainee driver by comparison between control movements applied to said device (2) by the trainee driver and previously recorded model steering control movements by the model driver,

— means for initiating a displacement of the images with respect to the display window as a function of said errors,

characterized in that it comprises in addition :

— a video disk reader (14) for the production of said images, on which there have been recorded the steering control movements of the model driver and the moving scene which is optically compressed in at least one direction corresponding to that of the possible steering errors, said scene being observed by the model driver at a wider angle than that of the display window,

— and means (35, 36, 37) for producing an expansion which compensates for the compression at the time of recording and a selection of a fraction of the expanded recording to be displayed in said window.

7. Device in accordance with claim 6, characterized in that it comprises means suited to the execution of the method in accordance with any one of claims 1 to 5.

**Patentansprüche**

1. Verfahren zum Trainieren des Führens von Fahrzeugen in einem Simulationsstand (1), bestehend aus einer von einem Fahrschüler zu bedienenden Lenkvorrichtung (2) und aus Mitteln (4) zur Wiedergabe einer vorbeiziehenden Landschaft, wobei

— ein für den Fahrer sichtbares Bildfenster (21) festgelegt wird,

— eine gespeicherte Aufnahme einer vor einem Modellfahrer vorbeiziehenden Landschaft verwendet wird, um Bilder (23) dieser Landschaft vor dem Simulationsstand (1) zu erzeugen,

— vom Fahrschüler gemachte Lenkfehler dadurch festgestellt werden, daß die vom Fahrschüler vorgenommenen Bewegungen der Lenkvorrichtung (2) mit den gespeicherten Lenkbewegungen des Modellfahrers verglichen werden,

— Verschiebungen des Bildfensters (21) für die wiedergegebenen Bilder in Abhängigkeit von den genannten Fehlern gesteuert werden, wobei das Verfahren dadurch gekennzeichnet ist, daß

— die vorbeiziehende Landschaft in wenigstens einer den möglichen Lenkfehlern entsprechenden Richtung optisch komprimiert wird, wobei von der vom Modellfahrer unter einem breiteren Blickwinkel als dem des genannten Bildfensters (21) gesehenen Landschaft ausgegangen

wird,

— die komprimierte, vorbeiziehende Simulation optisch gleichzeitig mit den Lenkbewegungen des Modellfahrers auf eine Videoplatte (14) aufgenommen wird,

— die Bilder (23) durch Auslesen der komprimierten Aufnahme von der Videoplatte erzeugt werden, indem die Kompression der Aufnahme durch eine Expansion kompensiert wird und ein Ausschnitt (22) der expandierten Aufnahme zur Wiedergabe in dem Bildfenster (21) ausgewählt wird.

2. Verfahren nach Anspruch 1, dadurch gekennzeichnet, daß die Aufzeichnung der vom Modellfahrer getätigten Steuerbewegungen auf einem Kanal der Videoplatte erfolgt, der normalerweise dem Ton vorbehalten ist.

3. Verfahren nach einem der Ansprüche 1 oder 2, dadurch gekennzeichnet, daß die Landschaftsaufnahme in Form eines Videosignals eines komprimierten Bildes erzeugt wird, welches als Filmaufnahme mit einem anamorphischen Objektiv gewonnen wurde.

4. Verfahren nach einem der Ansprüche 1 bis 3, dadurch gekennzeichnet, daß die Expansion durch eine Verstärkung des Abtaststromes entsprechend der aus dem komprimierten Video-Bildsignal abgeleiteten Kompressionsrichtung erreicht wird und daß die Auswahl des Bildfensters durch eine Verschiebung des Strom-Mittelwertes erfolgt.

5. Verfahren nach einem der Ansprüche 1 bis 4, dadurch gekennzeichnet, daß die Lenkfehler nach den Ausrichtungsänderungen der Lenkvorrichtung pro Zeiteinheit bestimmt werden, wobei ein Vergleich erfolgt zwischen den Lenkbewegungen des Fahrschülers und einer Aufzeichnung der Modell-Lenkbewegungen, die bei einer konstanten Geschwindigkeit des Fahrzeugs durchgeführt wurden.

6. Vorrichtung zum Trainieren des Führens von Fahrzeugen in einem Simulationsstand (1), bestehend aus

— einer von einem Fahrschüler zu betätigenden Lenkvorrichtung (2),

— Mitteln (4) zur Wiedergabe einer gespeicherten Aufnahme einer vor einem Modellfahrer vorbeiziehenden Landschaft, um Bilder (23) dieser Landschaft vor dem Simulationsstand (1) zu erzeugen,

— einem Bildfenster zur Wiedergabe eines Ausschnittes der Bilder (23) aus der gespeicherten Aufnahme vor dem Fahrschüler,

— Mitteln (25) zur Feststellung der Lenkfehler des Fahrschülers durch Vergleich der Betätigungen der Lenkvorrichtung (2) durch den Fahrschüler mit den vorab aufgezeichneten Modell-Lenkbefehlen des Modellfahrers,

— Mitteln zum Verschieben dieser Bilder in dem Bildfenster je nach begangenen Fehlern, dadurch gekennzeichnet, daß sie außerdem aus folgenden Vorrichtungsteilen besteht:

— einem Videoplatten-Wiedergabegerät, das die Wiedergabe der genannten Bilder gewährleistet und worauf die Lenkbewegungen des Modellfahrers und die wenigstens in einer den möglichen Lenkfehlern entsprechenden Richtung komprimierte vorbeiziehende Landschaft optisch aufgezeichnet ist, wobei die Landschaft vom Modellfahrer unter einem breiteren Blickwinkel als dem des Bildfensters gesehen wurde,

— und Mitteln (35, 36, 37), die eine kompensierende Expansion der bei der Aufnahme erfolgten Kompression gewährleisten und einen Ausschnitt der expandierten Aufnahme zur Wiedergabe in dem Bildfenster auswählen.

7. Vorrichtung nach Anspruch 6, dadurch gekennzeichnet, daß sie aus Mitteln besteht, die zur Durchführung des Verfahrens nach einem der Ansprüche 1 bis 5 geeignet sind.

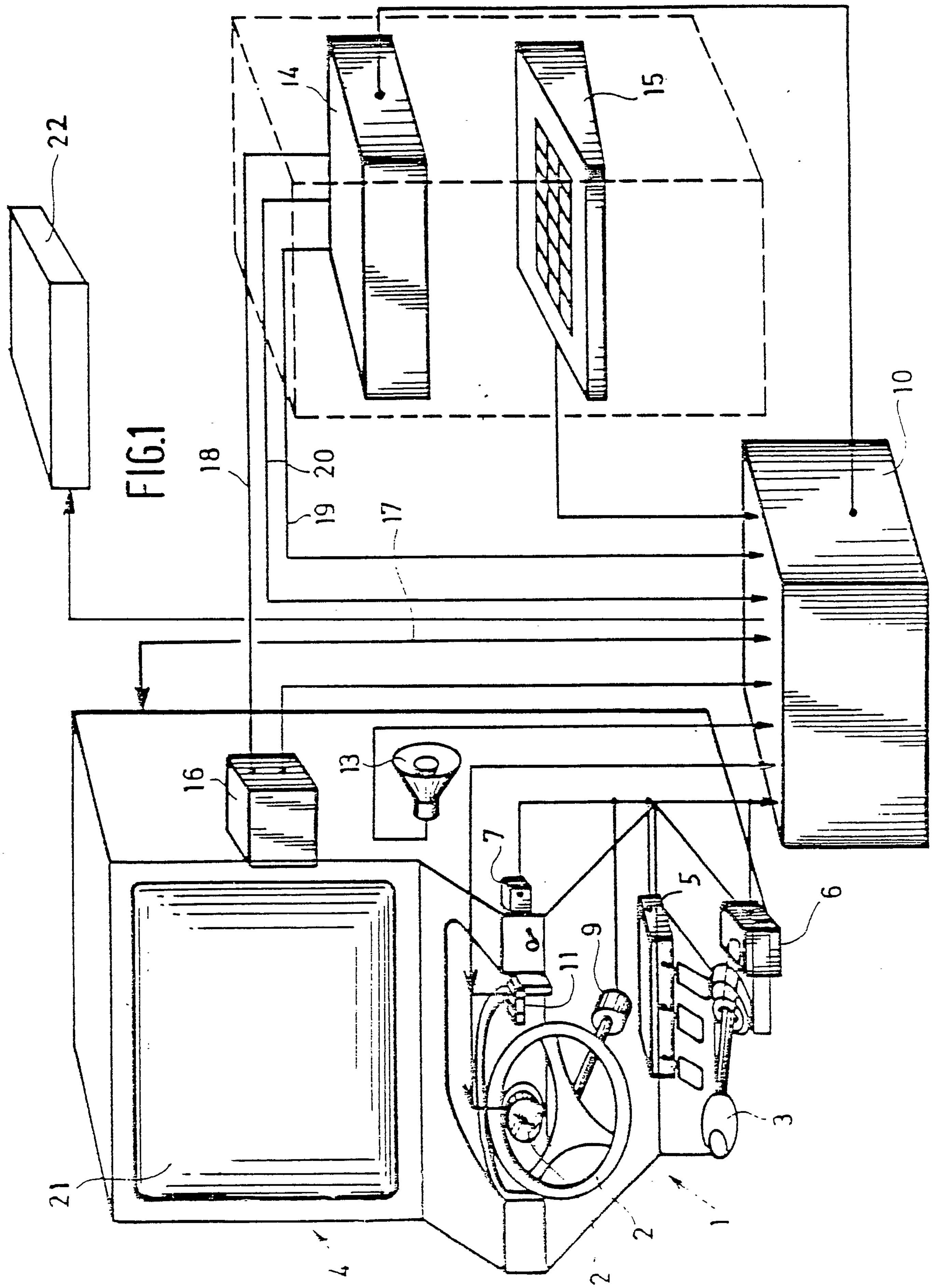


FIG.1

FIG-2

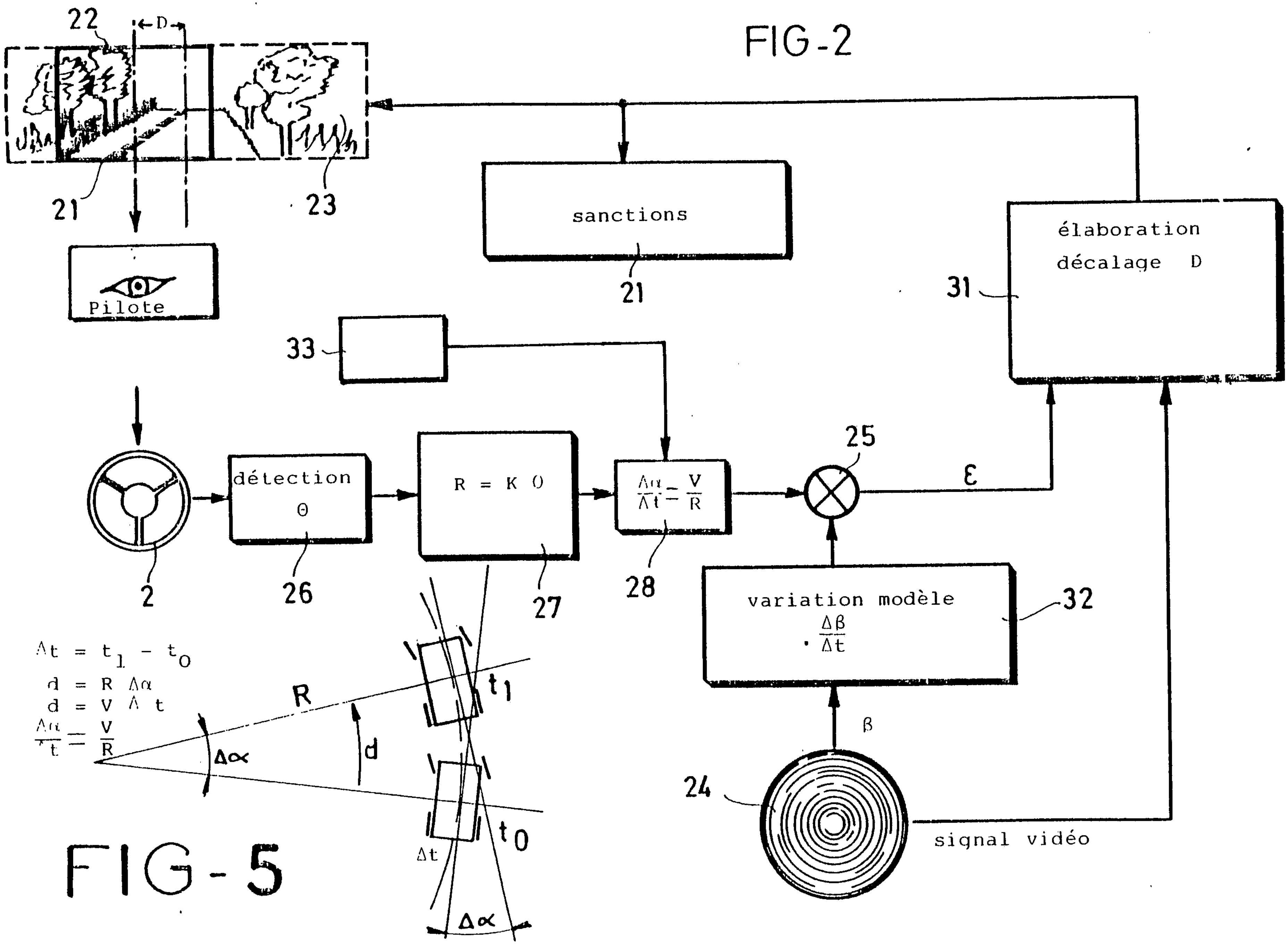
22
D
21
23
Pilote
sanctions
21
élaboration
décalage D
31
33
2
détection
Θ
26
R = K Θ
27
$\frac{\Delta\alpha}{\Delta t} = \frac{V}{R}$
28
25
ε
variation modèle
$\cdot \frac{\Delta\beta}{\Delta t}$
32
β
24
signal vidéo
$\Delta t = t_1 - t_0$
$d = R \Delta\alpha$
$d = V \Delta t$
$\frac{\Delta\alpha}{\Delta t} = \frac{V}{R}$
R
d
Δα
$t_1$
$t_0$
Δt
Δα

FIG-5

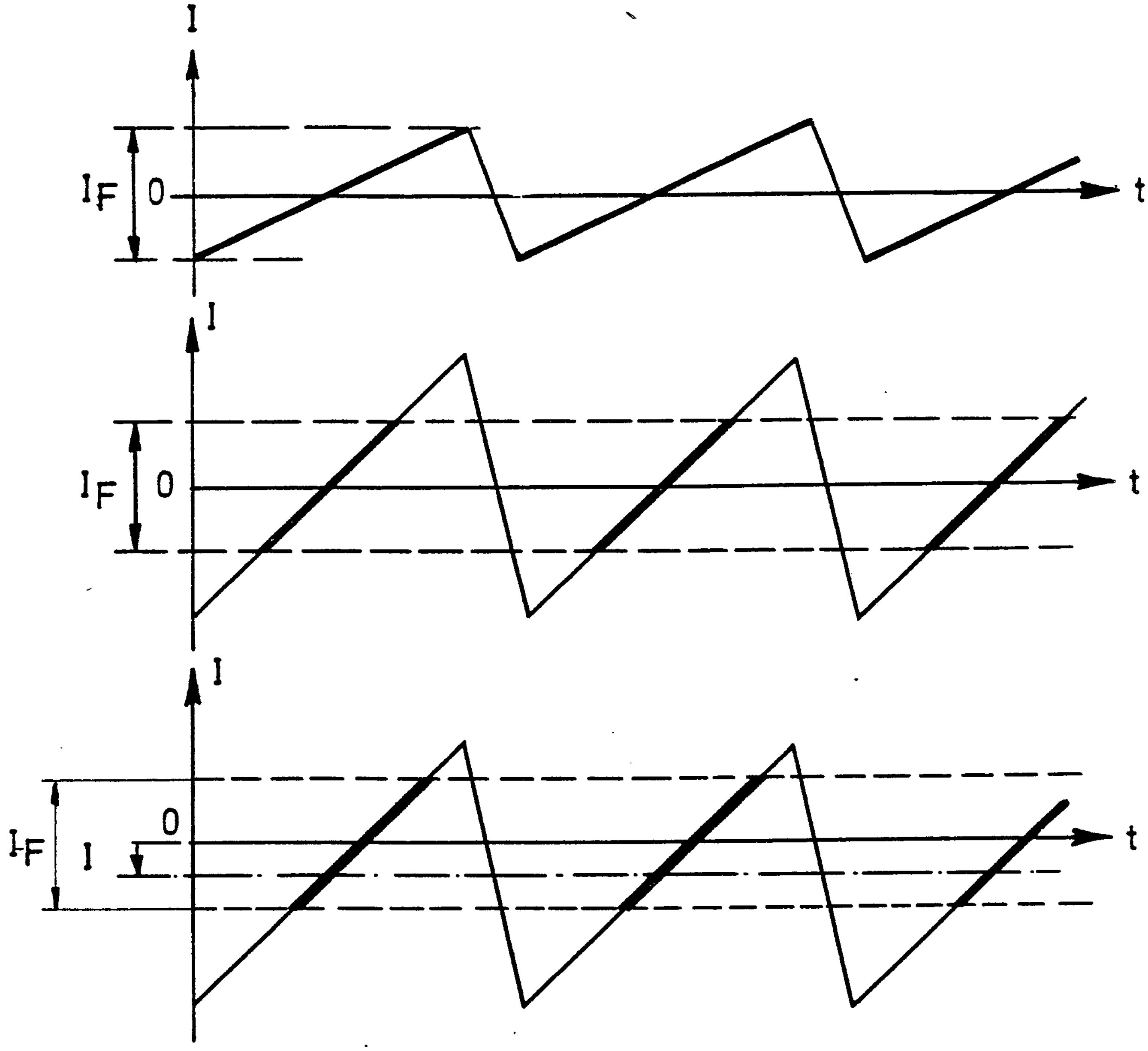


FIG.3

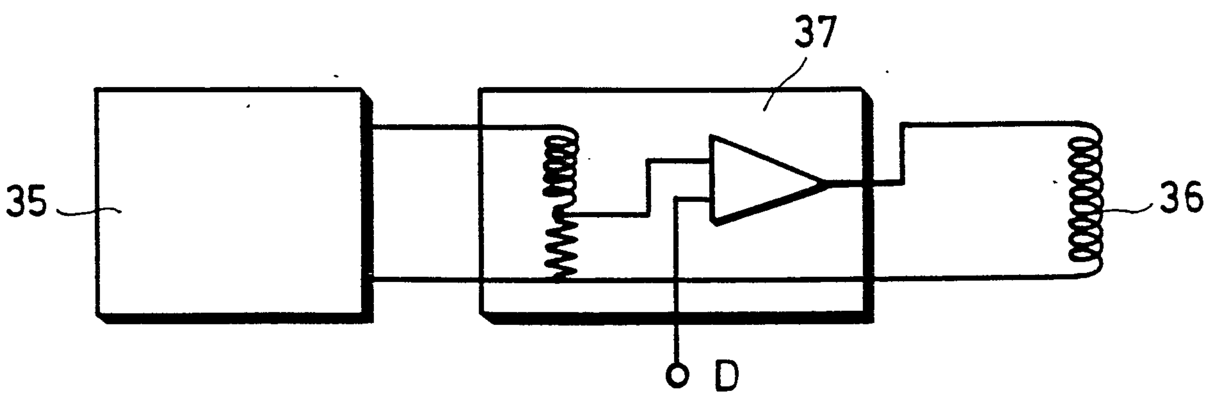


FIG.4